Europäisches Patentamt

European Patent Office

Office européen des brevets

(11) Publication number: **0 416 843 A2**

# EUROPEAN PATENT APPLICATION

(21) Application number: 90309609.7

(22) Date of filing: 03.09.90

(51) Int. Cl.5: **C08K 5/00**, C08L 23/12, C08L 25/02, //(C08K5/00,5:02, 5:13,5:57)

(30) Priority: 06.09.89 US 403405
23.10.89 US 425299

(43) Date of publication of application:
**13.03.91 Bulletin 91/11**

(34) Designated Contracting States:
**BE DE ES FR GB IT LU NL**

(71) Applicant: **ETHYL CORPORATION**
**Ethyl Tower 451 Florida Boulevard**
**Baton Rouge Louisiana 70801(US)**

(72) Inventor: **Schleifstein, Robert Alan**
**27 Deborah Drive**
**Edison, New Jersey 08820(US)**

(74) Representative: **Myerscough, Philip Boyd et al**
**J.A.Kemp & Co. 14, South Square Gray's Inn**
**London, WC1R 5EU(GB)**

(54) Thermally stabilized polypropylene- or styrenic polymer-based thermoplastic formulations.

(57) This invention relates to a polypropylene- or styrenic polymer-based thermoplastic formulation containing a brominated cycloaliphatic flame retardant and a thermal stabilizer system comprising an organotin stabilizer, a hindered phenolic antioxidant and, optionally, a polyhydroxy aliphatic compound.

EP 0 416 843 A2

# THERMALLY STABILIZED POLYPROPYLENE- OR STYRENIC POLYMER-BASED THERMOPLASTIC FORMULATIONS

This invention relates to thermally stabilized polypropylene- or styrenic polymer-based thermoplastic formulations containing brominated cycloaliphatic flame retardants.

Thermoplastic formulations based on polypropylene or styrenic polymers are well known, and those improved by the present invention are the formulations in which the polypropylene is an isotactic homopolymer of propylene or a block copolymer of such an isotactic homopolymer and polyethylene, while the styrenic polymer is general-purpose polystyrene (GPPS) or impact polystyrene (IPS). As is also known, GPPS is a clear polymer having a weight average molecular weight in the range of 200-30,000, and IPS is a translucent or opaque rubber-modified polystyrene which is usually classified as medium-impact polystyrene (MIPS) or high-impact polystyrene (HIPS), the former containing less rubber than the latter.

When a polypropylene or styrenic polymer is to be extruded, molded, or otherwise formed into articles in which flame retardancy is important or essential, it is customary to include a flame retardant in the formulation, e.g., a brominated cycloaliphatic compound such as tetra bromocyclooctane or hexabromocyclododecane (HBCD), frequently in combination with a flame retarding synergist such as antimony oxide. The HBCD is generally a mixture of solid HBCD isomers. The isomer identities and their amounts are determinative of whether the HBCD is a low-melt product having a melting point range within the range of from 168°C to 185°C, for example a melting point of 172-184°C, or a high melt product having a melting point range within the range from 185°C to 205°C, for example a melting point of 185-190°C or a melting point of 200-205°C. Other isomeric mixtures are possible to provide different melting points.

While brominated cycloaliphatics are excellent flame retardants, their presence in polypropylene- or styrenic polymer-based thermoplastic formulations can cause serious color and/or viscosity problems if the thermoplastic formulations are exposed to the high temperatures which are used in some article or film forming techniques.

This invention relates to thermally stabilized, flame retardant, polypropylene- or styrenic polymer-based thermoplastic formulations which do not suffer significant color and/or viscosity degradation under conventional injection or extrusion molding conditions.

The thermoplastic formulations of this invention comprise polypropylene, general-purpose polystyrene (GPPS), or impact-modified polystyrene (IPS); a flame retardant amount of a brominated cycloaliphatic compound; and a thermal stabilizer system comprised of (i) from 2 to 10 weight percent of an organotin stabilizer, (ii) from 1 to 3 weight percent of a hindered phenolic antioxidant, and, optionally, (iii) from 1.5 to 6 weight percent of polyhydroxy aliphatic compound which is capable of chelating transition metals which may be in said thermoplastic formulation. All weight percents referred to above are based upon the total weight of the brominated cycloaliphatic compound used in the formulation.

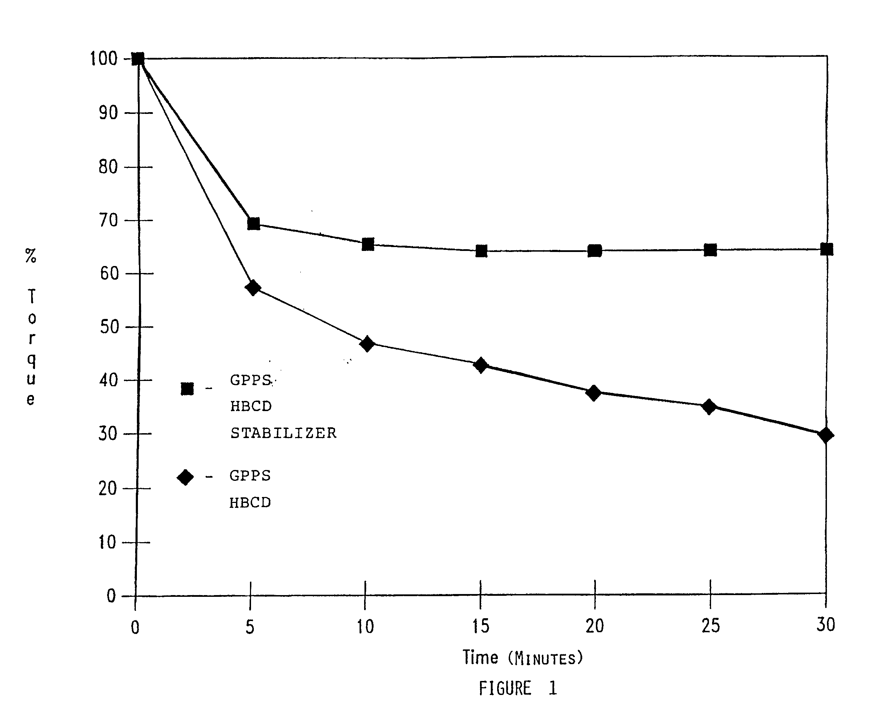

Figure 1 is a graph of % Torque values vs Time for a thermoplastic formulation containing a stabilizer system of the invention and for a thermoplastic formulation not containing such system.

For the purposes of this invention, the GPPS and the IPS may be homopolymers, copolymers or block polymers and formed from such vinyl aromatic monomers as styrene, ring-substituted methyl- or polymethylstyrenes, ring-substituted ethyl- or polyethyl- styrenes, ring-substituted propyl- or polypropylstyrenes, ring-substituted butyl- or polybutylstyrenes, ring-substituted mixed polyalkylstyrenes wherein the alkyl groups differ from each other, ring-substituted chloro-, bromo- or bromochloro- polystyrenes, ring-substituted alkyl or polyalkylchloro-, polyalkylbromo- or polyalkylbromochloro- styrenes in which the alkyl group(s) contain(s) from one to four carbon atoms, alphamethylstyrene, ring-substituted methyl- or polymethyl-alphamethylstyrenes, propyl- or polypropyl-alpha-methylstyrenes, butyl- or polybutyl-alpha-methylstyrenes, ring-substituted mixed polyalkyl-alpha-methylstyrenes wherein the alkyl groups differ from each other, ring-substituted chloro- or polychloro-alphamethylstyrenes, ring-substituted alkyl- or polyalkylchloro- or polychloro-alpha-methylstyrenes in which the alkyl group(s) contain(s) from one to four carbon atoms, and similar polymerizable styrenic monomers -- i.e., styrenic compounds capable of being polymerized by means of peroxide or like catalysts into thermoplastic resins. Homopolymers and copolymers of simple styrenic monomers (e.g., styrene, p-methyl-styrene, 2,4-dimethylstyrene, alpha-methyl-styrene, or p-chlorostyrene) are preferred from the standpoints of cost and availability.

The IPS may be either medium impact polystyrene (MIPS) or high impact polystyrene (HIPS) and are conventional. The rubber used in effecting impact modification is most often a butadiene rubber.

The styrenic polymer-based thermoplastic formulations will generally contain from 50 weight percent to 95 weight percent GPPS or IPS. The polypropylene-based thermoplastic formulations will generally contain from 50 weight percent to 98 weight percent polypropylene.

The brominated cycloaliphatic flame retardant constituent of the thermoplastic formulations of the invention are exemplified by tetrabromocyclooctane, hexabromo cyclododecane, dibromoethyldibromocyclohexane, dibromomethyl dibromocyclopentane, pentabromonochlorocyclohexane, hexabromocyclohexane, tetrabromotrichlorocyclohexane and the like. Preferred brominated cycloaliphatics are tetrabromocyclooctane and low melt and high melt hexabromocyclododecane. Most highly preferred are hexabromocyclododecane products having individual melting point ranges of 170°C-184°C, of 172°C-184°C, of 175°C-190°C, of 185°C-195°C, of 185°C-193°C, of 198°C-205°C, 201°C-205°C, or of 198°C-202°C.

The flame retardant amount of brominated cycloaliphatic compound used is dependent upon the compound selected, obtainment of a UL-94 rating of V-2, cost considerations, whether or not the thermoplastic formulation contains a flame retardant synergist, e.g. $Sb_2O_3$, whether or not the article formed from the thermoplastic formulation is expanded or not, and any adverse effect that the compound may have on the physical properties of the thermoplastic formulation. Generally, practitioners in the art rely upon an empirical approach in determining the flame retardant amount which best suits their needs.

If the thermoplastic formulation is for use in forming non-expanded styrenic polymer articles then a suitable flame retardant amount is within the range of from 5 to 12 weight percent. If no flame retardant synergist is used, an amount Within the range of from 2.5 to 5 weight percent is used.

When the thermoplastic formulation is suitable for and is used to produce expanded, i.e., foamed articles, the brominated cycloaliphatic compound can provide flame retardation when used in an amount within the range of from 0.5 to 3.0 weight percent. Generally, there is little benefit in using flame retardant synergist, e.g., $Sb_2O_3$, for expanded articles.

Heretofore, attempts to reduce the flame retardant amount of brominated cycloaliphatics needed by incorporating antimony oxide synergists, e.g. $Sb_2O_3$, in styrenic polymer-based thermoplastic formulations were not considered to be desirable as such incorporation usually accelerated degradation of the formulation under high temperature conditions. Now, however, with the thermal stabilizer systems of this invention, it is possible to reduce the flame retardant amount of brominated cycloaliphatic needed by using antimony oxide synergist without the usually expected concomitant degradation. The amount of antimony oxide synergist used is determined empirically and will generally fall within the range of from 0.5 to 2 weight percent. Preferred amounts are within the range of from 1 to 1.5 weight percent.

Preferred formulations will contain from 2.5 to 7 weight percent hexabromocyclododecane and from 0.75 to 1.25 weight percent $Sb_2O_3$ or from 2.5 to 7 weight percent tetrabromocyclooctane and from 0.75 to 1.25 weight percent $Sb_2O_3$.

In the polypropylene compositions, if a flame retardant synergist is not used the needed amount of flame retardant compound is quite large, e.g. 16 weight percent, and is not generally economically attractive.

Preferred thermoplastic polypropylene formulations of this invention will contain from 1.75 to 7 weight percent brominated cycloaliphatic compound and from 0.5 to 3.0 weight percent $Sb_2O_3$. Most preferred formulations will contain from 2.0 to 4.0 weight percent of the flame retardant compound and from 0.75 to 1.5 weight percent $Sb_2O_3$.

All of the foregoing weight percent ranges given above with respect to the brominated cycloaliphatic flame retardant and the flame retardant synergist are based upon the total weight of the thermoplastic formulation.

The organotin stabilizer constituent of the thermal stabilizer system of this invention can be most any of the art recognized organotin stabilizers. For, example the organotin stabilizer can be: dibutyltin dilaurate; dibutyltin maleate; (maleoxyldioxy)-bis[dibutyl(lauroyloxy)tin]; dibutyltin bis(n-alkyl maleate), the alkyl usually is $C_4$ or $C_8$; dibutyltin bis(lauryl mercaptide); thiabis(monobutyltin sulfide); dibutyltin sulfide; dimethlytin-bis-(isooctyl mercaptoacetate), also the analogous dibutyltin- and di-n-octyltin-derivatives thereof; dimethyltin bis($\beta$-alkanoyloxyethylmercaptide); dibutyltin-$\beta$-mercaptopropionate, also the analogous di-n-octyltin-derivative thereof; thiabismonomethyltin-bis($\beta$-alkanoyloxyethylmercaptide); and the like.

The most preferred organotin stabilizers are the alkyltin mercaptides of the formula $(R)_2Sn(SR')_2$ wherein R is an alkyl group containing 4 to 8 carbon atoms and R' is an alkyl group containing 8 to 14 carbon atoms. A most highly preferred organotin stabilizer is dibutyltin-bis(dodecamercaptide).

The organotin stabilizer is used in an amount sufficient to prevent significant color degradation without causing significant loss in viscosity. This amount is best determined by empirical methods. Generally, from 2 weight percent to 10 weight percent organotin, based upon the weight of the brominated cycloaliphatic flame retardant used, is suitable. When the organotin stabilizer is of the formula $(R)_2Sn(SR')_2$, from 4 to 6 weight percent is preferred.

The hindered phenolic antioxidant constituent of the thermal stabilizer system is preferably 1,3,5-

3

trimethyl-2,4,6-tris(3,5-di-tert-butyl-4-hydroxybenzyl)benzene. This antioxidant can be obtained from Ethyl Corporation as ETHANOX® 330 antioxidant. Other suitable antioxidants are those which are art-recognized as antioxidants available for use in thermoplastic formulations. Exemplary of such are: 2,6-di-tert-butyl-p-cresol; 2,2'-methylenebis(4-methyl-6-tert-butylphenol); 4,4'-butylidenebis(6-tert-butyl-m-cresol); 1,1,3-tris(2-methyl-4-hydroxy- 5-tert-butyl-phenyl)butane; 4,4'-methylenebis(2,6-di-tertbutylphenol); octadecyl 3-(3,5-di-tert-butyl-4-hydroxyphenyl)propionate; 2,6-di(1-methylheptadecyl)-p-cresol; tetrakis[methylene 3-(3',5'-di-tert-butyl-4'-hydroxyphenyl)propionate]methane; and 4,4'-cyclohexylidene-bis(2-cyclohexylphenol).

The amount of antioxidant used is that amount which is found sufficient to prevent significant viscosity degradation (melt viscosity) of the thermoplastic formulation. Generally, an antioxidant amount within the range of from 1 weight percent to 3 weight percent, based upon the weight of the brominated cycloaliphatic flame retardant, will be sufficient. A preferred range is from 1.5 weight percent to 2.5 weight percent. For the preferred 1,3,5-trimethyl-2,4,6-tris-(3,5-di-tert-butyl-4-hydroxybenzyl)benzene an amount within the range of from 1.75 weight percent to 2.25 weight percent is suitable.

The optional polyhydroxy aliphatic constituent of the thermal stabilizer system is one which is capable of chelating transition metals which may be present in the thermoplastic formulation. If such metals are not present, then this optional constituent is not needed. These metals are usually present as impurities, or as constituents of lubricants added to the formulation. Exemplary metals are iron, manganese, zinc and the like. If these metals are not chelated they can significantly contribute to color degradation. The polyhydroxy aliphatics most suitable for use in this invention are those having at least 2, and preferably at least 3, hydroxy groups and 3 to 15 carbon atoms. Examples are, pentaerythritol, dipentaerythritol, tripentaerythritol, glycerol, trimethylolpropane, or trimethylolethane. Of these, trimethylolpropane, trimethylolethane, dipentaerythritol, and tripentaerythritol are preferred. Most highly preferred is trimethylolethane.

The amount of polyhydroxy aliphatic used is dependent to some extent upon the metal content of the thermoplastic formulation. In most instances, from 1.5 to 6 weight percent is suitable, with from 2 to 5 weight percent being most preferred. These weight percentages are based upon the weight of the brominated cycloaliphatic flame retardant used in the formulation.

The thermoplastic formulations of this invention can be conventionally prepared using art-recognized blending equipment, e.g., a Brabender mixer. The various constituents can be added to the selected piece of equipment one at a time, all at once or in any combination.

Conventional molding techniques, e.g., injecting molding, or extrusion can be performed on the thermoplastic formulations of the invention to form articles therefrom. Tle articles so formed will not show the results of significant color and viscosity degradation which one skilled in the art would normally expect when using such techniques on polypropylene, GPPS, or IPS which has been flame retarded with a brominated cycloaliphatic.

The thermoplastic formulations may also contain conventional additives, such as, pigments, fillers, dyes, plasticizers, anti-static agents, processing aids and the like.

The following Examples are illustrative of the invention and are not to be taken as limiting the scope thereof.

## Example I

The following procedure was utilized to obtain the data points used in the graph depicted in Figure 1. The percent torque values represent the torque, as grammeters, measured at each indicated time interval for each sample divided by the torque measured for neat GPPS at the same indicated time interval and multiplied by 100.

## Procedure

To the mixing bowl of a Brabender Type PL-V150 Plasti-corder (C. W. Brabender Instrument, Inc.) was added 50 grams of general purpose polystyrene (GPPS). The Brabender had been previously preheated to 200°C. After a melt had formed, the Brabender was set at 66 rpm mixing speed. To measure the torque required to maintain this mixing speed over time, the Brabender motor was equipped with a measuring head to measure its torque output. These measurements were taken at different time intervals and recorded.

4

The same procedure as above was followed again except that the Brabender was charged with a formulation of 46.5 grams of GPPS and 3.5 grams of hexabromocyclododecane (HBCD).

Again, the same procedure was followed except that the Brabender was charged with a formulation containing 46.11 grams of GPPS, 3.5 grams of HBCD, and 0.39 grams of a stabilizer system comprising 0.14 grams of trimethylolethane, 0.07 grams of ETHANOX® 330 antioxidant (1,3,5-trimethyl-2,4,6-tris(3,5-di-tert-butyl-4-hydroxybenzyl)benzene) and 0.18 grams of Thermolite T-20 [dibutyltinbis(dodecamercaptide)] which is available from M&T Chemicals, Inc. of New Jersey.

Figure 1 shows that the GPPS-HBCD formulation which used the stabilizer system of this invention maintained about 65% of the torque value obtained with neat GPPS at the same time interval. For an unstabilized GPPS-HBCD formulation, Figure 1 shows that the torque values dropped to below 40% of the torque values obtained for GPPS and HBCD. Such a drop in torque values is a clear indication that the viscosity of the unstabilized GPPS-HBCD formulation was substantially degraded.

## Example II

The procedure of Example I was repeated except that the styrenic polymer was HIPS instead of GPPS. The particular thermoplastic formulations, torque values, in gram-meters, and the color observations are reported in the following Table.

EP 0 416 843 A2

TABLE

| Sample No. | 1 | 2 | 3 | 4 | 5 | 6 | 7 | 8 | 9 | 10 | 11 | 12 |
|---|---|---|---|---|---|---|---|---|---|---|---|---|
| | MMK HIPS | MMK HIPS & 7 wt % HBCD[1] | MMK HIPS & 7 wt % HBCD[2] | MMK HIPS & 7 wt % HBCD[3] | MMK HIPS & 7 wt % HBCD[4] | MMK HIPS & 7 wt % HBCD[5] | MMK HIPS & Stabilizer | MMK HIPS Stabilizer HBCD[1] | MMK HIPS Stabilizer HBCD[2] | MMK HIPS Stabilizer HBCD[3] | MMK HIPS Stabilizer HBCD[4] | MMK HIPS Stabilizer HBCD[5] |
| Time (Mins) — tv c | tv c | tv c | tv c | tv c | tv c | tv c | tv c | tv c | tv c | tv c | tv c | tv c |
| 05 | 520 white | 380 tan | 410 tan | 410 tan | 420 tan | 380 tan | 550 white | 460 white | 450 white | 470 white | 430 white | 460 white |
| 10 | — | 290 dark tan | 310 gray tan | 320 gray tan | 320 dark tan | 300 gray tan | — | — | — | — | — | — |
| 15 | 530 white | 240 light brown | 260 gray brown | 280 gray brown | 300 light brown | 270 gray brown | 530 white | 430 white | 440 white | 470 white | 410 off white | 450 white |
| 20 | — | 210 brown | 230 brown | 250 brown | 280 brown | 240 brown | — | — | — | — | — | — |
| 25 | 520 white | — | — | 230 brown | 250 brown | 230 dark brown | — | — | — | — | — | — |
| 30 | — | — | — | 210 dark brown | 220 dark brown | 200 dark brown | 530 white | 420 off white | 430 white | 420 gray white | 420 off white | — |
| 35 | 500 off white | — | — | — | — | — | — | — | — | — | — | — |

T A B L E - (Continued)

| Sample No. | 1 | 2 | 3 | 4 | 5 | 6 | 7 | 8 | 9 | 10 | 11 | 12 |
|---|---|---|---|---|---|---|---|---|---|---|---|---|
| | MMK HIPS | MMK HIPS & 7 wt % HBCD[1] | MMK HIPS & 7 wt % HBCD[2] | MMK HIPS & 7 wt % HBCD[3] | MMK HIPS & 7 wt % HBCD[4] | MMK HIPS & 7 wt % HBCD[5] | MMK HIPS & Stabilizer | MMK HIPS Stabilizer HBCD[1] | MMK HIPS Stabilizer HBCD[2] | MMK HIPS Stabilizer HBCD[3] | MMK HIPS Stabilizer HBCD[4] | MMK HIPS Stabilizer HBCD[5] |
| Time (Mins) | tv   c | tv   c | tv   c | tv   c | tv   c | tv   c | tv   c | tv   c | tv   c | tv   c | tv   c | tv   c |
| 45 | 490 off white | — | — | — | — | — | 520 white | 410 off white | 410 white | 440 off white | 410 slight yellow tint | 420 off white |
| 55 | 470 slight yellow tint | — | — | — | — | — | — | — | — | — | — | — |
| 60 | 460 slight yellow tint | | | | | | 520 off white | 380 off white | 420 off white | 430 off white | 380 yellow tine | 430 slight yellow tint |

MMK HIPS — A high impact polystyrene product sold by Mitsubishi-Monsanto

Stabilizer — 0.35 wt % dibutyltin bis(lauryl mercaptide), 0.28 wt % trimethylol ethane and 0.14 wt % 1,3,5-trimethyl-2,4,6-tris(3,5-di-tert-butyl-4-hydroxybenzyl)benzene, all based upon the total weight of the thermoplastic formulation

HBCD[1] — A hexabromocyclododecane product having a melting point of 175°C – 190°C

HBCD[2] — A hexabromocyclododecane product having a melting point of 185°C – 193°C

HBCD[3] — A hexabromocyclododecane product having a melting point of 198°C – 202°C

HBCD[4] — A hexabromocyclododecane product sold by Great Lakes Chemical Corporation

HBCD[5] — A hexabromocyclododecane product sold by Dead Sea Bromine Company, Ltd.

tv — torque value measured in gram-meters

c — color by visual determination

A comparison of the tv and color entries for Samples 2-6 and for Samples 8-12 shows that viscosity degradation, as compared against the control samples, (Samples 1 and 7), is by far the greatest for Samples 2-6 which did not include the stabilizer system of the invention. Also, the color degradation for Samples 2-6 was extreme, with a brown color being obtained only after minutes. The stabilized samples, Samples 8-12, had colors which did not near the brown color despite 60 minutes of exposure to the test conditions.

## EXAMPLE III

The stabilizer system of this invention is highly efficient in protecting a polypropylene-HBCD based formulation from thermal degradation. Since degradation is evidenced by a loss in the formulations' viscosity and a change in its color, the following procedure, which provides a measure of viscosity and color change, was used.

## Procedure

To the mixing bowl of a Brabender Type PL-V150 Plasti-corder (C. W. Brabender Instrument, Inc.) was added grams of Profax® 6523 polypropylene (Himont USA Inc., Wilmington, Delaware). The Brabender had been previously preheated to 230°C. After a melt had formed, the Brabender was set at 66 rpm mixing speed. To measure the torque required to maintain this mixing speed over time, the Brabender motor was equipped with a measuring head to measure its torque output. Torque measurements, in grammeters, were taken at different time intervals and recorded. Also, pellets were obtained from the melt at these same time intervals.

The same procedure as above was followed again except that the Brabender was charged with a formulation of 38.6 grams of Himont's Profaxe 6523 polypropylene, 1.0 gram of low melt HBCD and 0.4 grams of $Sb_2O_3$. Thus, the formulation contained 96.5 weight percent polypropylene, 2.5 weight percent low melt HBCD, and 1.0 weight percent $SB_2O_3$.

Again, the same procedure was followed except that the Brabender was charged with a formulation containing 38.6 grams of Himont's Profrax® 6523 polypropylene, 0.885 grams of low melt HBCD, 0.4 grams of $Sb_2O_3$ and 0.097 grams of a stabilizer system comprising 0.035 grams of trimethylolethane, 0.018 grams of ETHANOX® 330 antioxidant (1,3,5-trimethyl2,4,6-tris(3,5-di-tert-butyl-4-hydroxybenzyl)benzene) and 0.044 grams of Thermolite® T-20 [dibutyltin-bis(dodecamercaptide)] which is available from M&T Chemicals, Inc. of New Jersey. In addition, 0.0185 grams of HySill® 233, Pittsburg Plate and Glass, Inc. was added as a flow improver. The formulation thus contained 96.5 weight percent polypropylene, 2.5 weight percent stabilized low melt HBCD and flow improver and 1.0 weight percent $SB_2O_3$.

The following Table reports the results obtained.

TABLE

| Sample No. | 13 | | 14 | | 15 | |
|---|---|---|---|---|---|---|
| | Profax 6523 | | Profax 6523, 1% $Sb_2O_3$ 2.5% Low Melt HBCD | | Profax 6523, 1% $Sb_2O_3$ 2.5% Low Melt HBCD and Stabilizer System | |
| Time | torque | | torque | | torque | |
| (Mins) | value | color | value | color | value | color |
| 05 | 240 | translucent white | 140 | cream | 300 | white |
| 10 | 80 | light yellow | 10 | light tan | 240 | white |
| 15 | - | - | - | - | 200 | off white |
| 20 | - | - | - | - | 170 | off white |
| 25 | - | - | - | - | 140 | cream |
| 30 | - | - | - | - | 110 | light tan |
| Torque values measured in gram-meters Color by visual determination | | | | | | |

Sample 13, which was 100 weight percent polypropylene, showed significant degradation after only 20 minutes at 230°C. Sample 14, which contained only polypropylene, HBCD and $SB_2O_3$, showed severe degradation after 10 minutes as is evidenced by the great loss in viscosity and change in color. In distinction, Sample 15, which is of the invention, showed remarkable stability in regards to viscosity retention and color change.

**Claims**

1. A thermoplastic formulation which comprises:
(a) polypropylene, general-purpose polystyrene, or impact-modified polystyrene;
(b) a flame retardant amount of a brominated cycloaliphatic compound; and
(c) a thermal stabilizer system comprised of,
(i) from 2 to 10 weight percent of an organotin stabilizer,
(ii) from 1 to 3 weight percent of a hindered phenolic antioxidant, and
(iii) optionally, from 1.5 to 6 weight percent of a polyhydroxy aliphatic compound which is capable of chelating metals which may be present in said thermoplastic formulation,
said weight percentages being based on the weight of said brominated cycloaliphatic compound in the thermoplastic formulation.
2. A formulation according to claim 1 wherein said brominated cycloaliphatic compound is hexabromocyclododecane.
3. A formulation according to claim 1 wherein said brominated cycloaliphatic compound is tetrabromocyclooctane.
4. A formulation according to claim 1, 2 or 3 wherein said organotin is of the formula $(R)_2Sn(SR')_2$ wherein R is an alkyl group having 4 to 8 carbon atoms and R' is an alkyl group having 8 to 14 carbon atoms.
5. A formulation according to any one of the preceding claims wherein said hindered phenolic antioxidant is 1,3,5-trimethyl-2,4,6-tris(3,5-di-tert-butyl-4-hydroxybenzyl).
6. A formulation according to any one of the preceding claims wherein said polyhydroxy aliphatic compound has at least three hydroxy groups and 3 to 15 carbon atoms.
7. A formulation according to any one of the preceding claims wherein said organotin is dibutyltin bis-(dodecamercaptide) and said polyhydroxy aliphatic compound is trimethylolethane.
8. A formulation according to claim 7 wherein said dibutyl bis(dodecamercaptide) is present in an amount from 4 to 6 weight percent, said hindered phenolic antioxidant in an amount from 1.75 to 2.25 weight percent and said trimethylolethane is present in an amount from 2 to 5 weight percent.
9. A formulation according to any one of the preceding claims wherein said formulation additionally contains antimony oxide.

10. Shaped articles of a formulation as claimed in any one of the preceding claims.

FIGURE 1

EP 0 416 843 A2